# EUROPÄISCHE PATENTSCHRIFT

(11) **EP 0 507 161 B1**
(45) Veröffentlichungstag und Bekanntmachung des Hinweises auf die Patenterteilung: **01.05.1996**
(21) Anmeldenummer: 92104884.9
(22) Anmeldetag: 20.03.1992
(51) Int. Cl.: B60R 7/02, B60R 7/08, B60P 7/08

(54) **Vorrichtung zur Fixierung von Behältnissen im Kofferraum eines Kraftfahrzeuges**
Fastening device for containers in the luggage compartment of a vehicle
Dispositif pour la fixation de récipients dans le compartiment à bagage d'un véhicule

(30) Priorität: 21.06.1991 DE 9107683 U; 04.04.1991 DE 9104087 U
(43) Veröffentlichungstag der Anmeldung: 07.10.1992
(73) Patentinhaber: friedola Gebr. Holzapfel GmbH & Co. KG, D-37276 Meinhard (DE); Bayerische Motoren Werke Aktiengesellschaft, D-80788 München (DE)
(72) Erfinder: Holzapfel, Jürgen, W-3446 Meinhard 5 (DE); Stöckl, Siegfried, 8308 Pfeffenhausen (DE)
(74) Vertreter: Marx, Lothar, Dr.

(56) Entgegenhaltungen:
- EP-A- 381 911
- WO-A-89/09153
- DE-U- 8 702 944
- DE-U- 9 107 683

## Beschreibung

Die Erfindung betrifft eine Vorrichtung zur Fixierung von Behältnissen im Kofferraum eines Kraftfahrzeuges.

Im Kofferraum eines Kraftfahrzeuges abgestellte Behältnisse sind den ständig wechselnden Beschleunigungskräften während der Fahrt, hervorgerufen durch das Durchfahren von Kurven oder durch Beschleunigungs- und Bremsvorgänge, ausgesetzt. Wenn sie, wie es meistens der Fall ist, lose im Kofferraum liegend aufbewahrt werden, kommt es dabei aufgrund ihrer Massenträgheit zu unkontrollierten Bewegungen. Sie rutschen auf der Kofferraumabdeckung, stoßen an die Kofferraumseitenwände oder kippen, werden verschmutzt, beschädigt oder beschädigen andere Gegenstände.

Als Vorkehrmaßnahme gegen ein Verrutschen ist es bekannt, Matten in Kofferräume zu legen, die aufgrund ihrer hohen Oberflächenrauhigkeit oder einer entsprechenden Profilierung ein darauf abgestelltes Behältnis in seiner Ausgangslage halten. Solch eine Matte erfüllt ihren Zweck jedoch nur dann zufriedenstellend, wenn das betreffende Behältnis eine entsprechend große Abstellfläche, günstige Abmaße und ein ausreichendes Abstellgewicht besitzt, ein sicherer Stand also von Hause aus gegeben ist. Sie versagt jedoch, wenn die Behältnisse abgerundete Ecken besitzen, leicht sind oder aber in einer Weise aufgestellt sein müssen, die ein Kippen begünstigt wie es beispielsweise bei hohen schmalen Getränkekästen der Fall ist. Um ein Rollen bzw. Kippen zu verhindern, werden dann häufig noch zusätzliche Aufnahmebehälter für die Behältnisse im Kofferraum aufgestellt, die zum einen Platz wegnehmen, zum anderen jedoch ihrerseits gegen Verrutschen und Umkippen abgesichert werden müssen.

Aus der DE 87 02 944 U1 ist eine Vorrichtung zur Fixierung von Behältnissen im Kofferraum eines Kraftfahrzeuges bekannt, bei der ein an seinen Enden am Kofferraumboden, d.h. an der Fahrzeugkarosserie, befestigbares Band vorgesehen ist.

Bei einer aus der EP 0 381 911 A1 bekannten Fixierungsvorrichtung wird ein Band an einem seiner beiden Enden mittels eines selbstspannenden Aufwicklers und an seinem anderen Ende mittels eines Befestigungsbolzens in einer oder mehreren Grundplatten, die beispielsweise im Kofferraum eines Kraftfahrzeuges auszulegen sind, befestigt. Durch Betätigen des Aufwicklers wird das Band, das beispielsweise um einen zu haltenden, runden Gegenstand gewickelt sein kann, gespannt und der Gegenstand so auf der Grundplatte fixiert. Diese Grundplatte kann einstückig oder aus mehreren Teilplatten gefertigt sein.

Die Erfindung hat es sich zur Aufgabe gemacht, eine Vorrichtung zur Fixierung von Behältnissen im Kofferraum eines Kraftfahrzeuges zu schaffen, die auf einfache Weise und flexibel den unterschiedlichsten Formen und Gewichten der zu fixierenden Behältnisse angepaßt werden kann. Sie soll als rutschfeste Unterlage und zum Klemmen von Behältnissen verwendet werden können. Desweiteren soll sie preiswert und insbesondere auf einfache Weise auch noch nachträglich montierbar sein.

Diese Aufgabe wird durch den Gegenstand des Anspruchs 1 gelöst.

Zweckmäßige Ausführungsformen der erfindungsgemäßen Vorrichtung werden durch die Merkmale der Unteransprüche definiert.

Durch die Verwendung von elastischen Bändern, die an ihren Enden fest mit der Kofferraumabdeckung eines Kraftfahrzeuges verbunden sind, wird eine platzsparende und flexibel einsetzbare Fixierung für Behältnisse in Kraftfahrzeugkofferräumen zur Verfügung gestellt. Da die Ober- und Unterseiten dieser Bänder rutschfest ausgebildet sind, können entsprechend schwere und flache Gegenstände, die nicht kippen können, so abgestellt werden, wie dies bisher auf den bereits angesprochenen Matten aus Gummi oder ähnlichem Material geschieht. Darüberhinaus können Behältnisse, die sonst wegrollen oder umkippen würden, gesichert werden, indem die elastischen Bänder über ein solches Behältnis gespannt werden und dieses somit einklemmen und sichern. Durch die Art der Befestigung, nämlich die Bänder durch die Kofferraumabdeckung zu haltern, gestaltet sich auch ihr nachträglicher Einbau einfach, da die Kofferraumabdeckung eines Kraftfahrzeuges leicht zugänglich ist oder für die Montage ohne weitere Umstände aus dem Fahrzeug herausgenommen werden kann.

Solch eine erfindungsgemäße Vorrichtung umfaßt zumindest ein einfaches Band, das unter leichter Spannung zwischen seinen beiden Befestigungspunkten auf einer Kofferraumabdeckung aufliegt. Zum sicheren Fixieren und Halten von Behältnissen ist die Verwendung von zwei solchen Bändern empfohlen. Darüberhinaus können jedoch auch noch weitere Bänder vorgesehen sein oder mehrere solcher Bänderpaare kombiniert werden. Ebenso kann sie als sternförmige Band-Struktur, die an mehr als zwei Befestigungspunkten an der Kofferraumabdeckung gehalten wird, ausgebildet sein.

Die Bänder der erfindungsgemäßen Vorrichtung werden in der Kofferraumabdeckung verankert. Dadurch werden insbesondere im Falle eines nachträglichen Einbaus keine vergleichsweise aufwendigen Blecharbeiten erforderlich. Zudem ist solch eine Kofferraumabdeckung unbeschränkt und leicht zugänglich, da sie jederzeit leicht aus dem Kofferraum herausgenommen werden kann.

In besonders einfacher Weise können die Bänder mit hakenförmigen Enden versehen sein, um so in entsprechende Aussparungen in der Kofferraumabdeckung eingehakt zu werden. Bevorzugterweise sind solche Befestigungspositionen jedoch durch speziell für diesen Zweck entwickelte Befestigungsteile definiert, die zur Aufnahme eines vorzugsweise verdickten Endes eines elastischen Bandes einen Hohlraum mit einer schlitzartigen Öffnung aufweisen. Das verdickte Ende eines solchen Bandes wird durch eine Verbreiterung der Öffnung eingeführt und dann im Hohlraum der Befestigung verschoben, so daß es durch den über den Hohlraum kragenden schmaleren Teil der Öffnung im Befestigungsteil zurückgehalten wird.

Durch die Verwendung separater Befestigungsteile, die in vorbereitete Aussparungen in der Kofferraumabdeckung eingesetzt werden, erhalten die Bänder gut definierte Befestigungspunkte. Deren form- und kraftschlüssiger Sitz in der Kofferraumabdeckung sorgt für eine gleichmäßige Krafteinleitung in diesen Punkten und verhindert ein Einreißen der Kofferraumabdeckung in den Aussparungen.

Um die Erfindung auch als einfache Rutschsicherung einsetzen zu können, weisen die Bänder eine rutschfeste Unter- und Oberseite auf, so daß auf den Bändern liegende Behältnisse nicht gegenüber den Bändern und die Bänder ihrerseits nicht gegenüber der Kofferraumabdeckung verrutschen können. Dazu können die Bänder entweder aus einem Material mit einem hohen Reibungskoeffizienten hergestellt oder aber an der Oberfläche mit einer entsprechenden Profilierung, insbesondere mit einer Rillung oder Rändelung, versehen sein.

Neben dieser Einsatzart, nämlich als einfache Rutschsicherung, bietet die erfindunsgemäße Vorrichtung ein zusätzliches Maß an Flexibilität, da die Bänder aufgrund ihrer Elastizität und ihrer guten Verankerung in der Kofferraumabdeckung ein Behältnis beliebiger Form auch umspannen und dadurch rutsch-, roll- sowie kippsicher einklemmen können.

Zusätzlich wird die Flexibilität noch durch die von Hand leicht lösbare Verbindung zwischen den Bändern und den Befestigungsteilen erhöht. Defekte Bänder können somit leicht ersetzt oder auch Bänder unterschiedlicher Elastizitäten leicht gegeneinander ausgetauscht werden.

Als Bandmaterialien eignen sich Thermoplaste, wie beispielsweise Polyvenylchlorid (PVC) oder Duroplaste, wofür Polyurethan (PUR) als Beispiel genannt sei, genauso wie Elastomere, insbesondere Gummi. Infolge der großen Variationsbreite der Materialien lassen sich die gewünschten Eigenschaften der Bänder, nämlich Elastizität, Dauerhaftigkeit, Rutschfestigkeit, Festigkeit und dergleichen den speziellen Anwendungen anpassen. Ein hochelastisches Band ermöglicht das Umspannen und Festklemmen von Behältnissen unterschiedlichster Form und Größe, während ein besonders festes Band mit einem hohen Elastizitätsmodul für schwere Behältnisse geeignet erscheint. Das hochelastische Band läßt sich schnell und ohne besondere Kraftanstrengung um ein Behältnis spannen und eignet sich daher in besonderer Weise für den alltäglichen Gebrauch.

Besonders flexibel an den jeweiligen Verwendungszweck anpaßbar sind Bänder mit einem mehrschichtigen Aufbau. Dabei ist jede Schicht durch eine oder auch mehrere Eigenschaften ausgezeichnet; die einzelnen Schichten können beispielsweise unterschiedlich elastisch, zug- bzw. reißfest, hart bzw. weich oder rutschfest ausgebildet sein. Das erfindungsgemäß mehrschichtige Band weist die vorteilhafte Kombination der Eigenschaften seiner einzelnen Schichten auf. Lediglich beispielhaft sei ein dreischichtig aufgebautes Band mit einer mittleren Schicht mit einem hohen Elastizitätsmodul und zwei äußeren, besonders rutschfesten Schichten genannt, das sich besonders als rutschfeste Unterlage, aber auch als Klemmvorrichtung für schwere Behältnisse eignet.

Die Erfindung wird nachstehend anhand einer bevorzugten Ausführungsform unter Bezugnahme auf die Zeichnungen im einzelnen erläutert. Dabei werden weitere Vorteile und Merkmale der vorliegenden Erfindung offenbart. Es zeigen:
- Fig. 1: eine Gesamtansicht einer erfindungsgemäßen Vorrichtung mit zwei elastischen Bändern
- Fig. 2: einen Befestigungsteil der erfindungsgemäßen Vorrichtung kurz vor der Montage in eine Aussparung einer Kofferraumabdeckung sowie ein zu einer Verdickung ausgebildetes Ende eines Bandes; und
- Fig. 3: ein montiertes Befestigungsteil mit dem Endstück eines eingeklemmten Bandes in Schnittdarstellung.

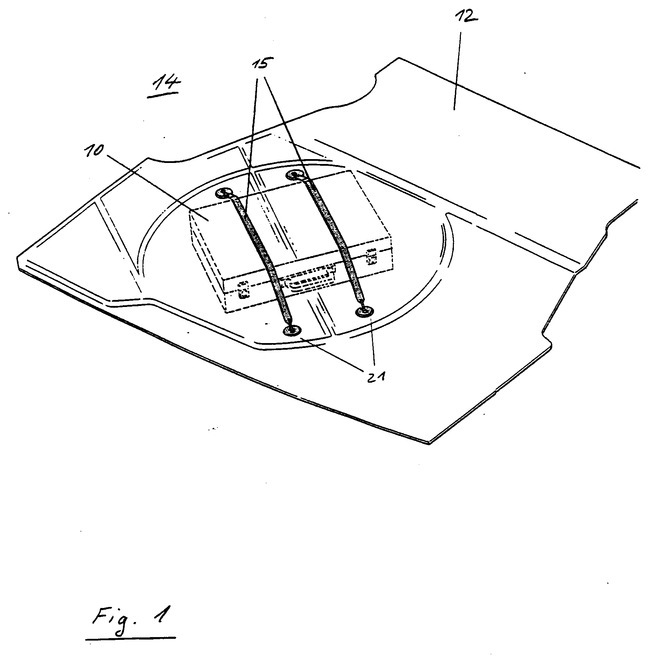

Fig. 1 zeigt einen typischen Anwendungsfall einer erfindungsgemäßen Vorrichtung 14 mit zwei Bändern 15, die über ein Behältnis 10, in diesem Fall ein Aktenkoffer, gespannt sind und diesen fest auf eine Kofferraumabdeckung 12 drücken. Selbstverständlich müssen die Bänder 15 nicht unbedingt, so wie in diesem speziellen Fall dargestellt, parallel zueinander verlaufen, sondern können je nach Anwendungsfall auch unter einem Winkel oder über kreuz zueinander angeordnet sein.

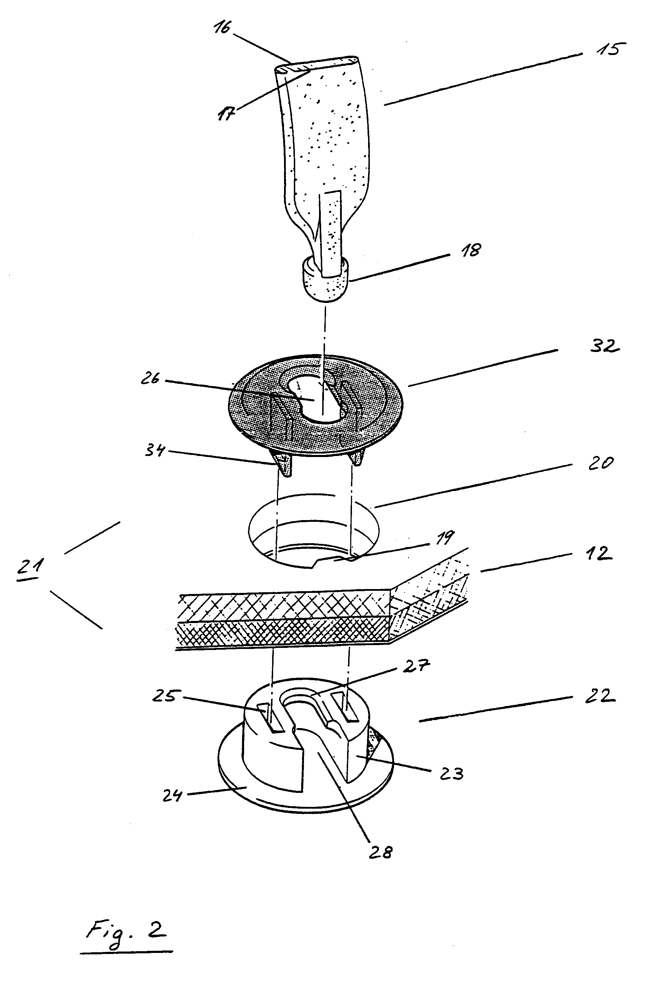

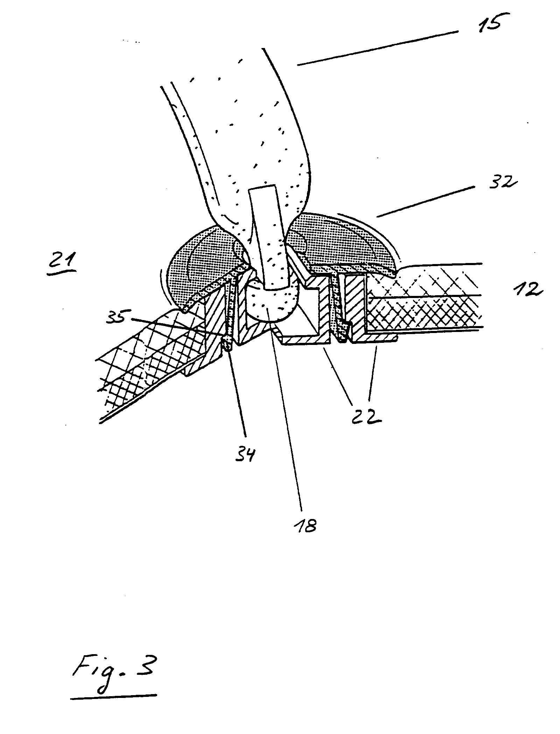

In Fig. 2 sind die Details der Verbindung zwischen einem Befestigungsteil 21 und der Kofferraumabdeckung 12 sowie die Verbindung zwischen dem Befestigungsteil 21 und einem Ende 18 des Bandes 15 dargestellt. Der Befestigungsteil 21 ist zweiteilig aufgebaut mit einem Unterteil 22 und einem Deckel 32. Das Unterteil 22 wird formschlüssig von unten in eine Aussparung 20 der Kofferraumabdeckung 12 eingesetzt. Anschließend wird der Deckel 32 mit widerhakenartigen Fortsätzen 34 von oben in schlitzartige Ausnehmungen 25 des Unterteils 22 eingeführt und, wie aus Fig. 3 ersichtlich ist, festgeclipst. Zu diesem Zweck weisen die Ausnehmungen 25 des Unterteils 22 Rücksprünge 35 auf, mit denen die Fortsätze 34 verhaken, so daß eine sichere und nur schwer lösbare Verbindung zwischen den beiden Teilen des Befestigungsteils 21 entsteht. Die Kofferraumabdeckung 12 ist nun zwischen dem verbreiterten unteren Rand 24 des Unterteils 22 und dem nach unten gewölbten äußeren Rand des Deckels 32 fest und gleichmäßig eingequetscht.

Die dadurch relativ großflächig verteilte Preßkraft bietet zusammen mit dem Formschluß zwischen dem Unterteil 22 und der Kofferraumabdeckung 12 die Gewähr für eine solide Befestigungsposition für das anschließend einzusteckende Ende 18 des Bandes 15.

Zur Aufnahme des Endes 18 des Bandes 15, das im dargestellten Ausführungsbeispiel einschichtig aus einem elastomeren Material, beispielsweise Gummi, ausgeführt ist, weisen das Unterteil 22 einen Hohlraum 28 und der Deckel 32 eine schlitzförmige Öffnung 26 auf. Die schlitzförmige Öffnung 26 ist an einem Ende ein wenig verbreitert, so daß ein zu einer Verdickung ausgebildetes Ende 18 eines Bandes 15 an dieser Stelle in den Hohlraum 28 eingeführt werden kann. Zur festen Verankerung wird das verdickte Ende 18 des Bandes 15 nach dem Einführen in Richtung zum schmaleren Teil der schlitzartigen Öffnung 26 des Deckels 32 geschoben. Im dargestellten Ausführungsbeispiel weist der Hohlraum 28 des Unterteils 22 zusätzlich noch einen überstehenden Rand 27 auf, der sich mit dem schmalen Ende der Öffnung 26 deckt.

Als Alternative zu Gummi kann ein solches Band 15 ganz allgemein aus einem elastomeren, thermoplastischen, duroplastischen, oder einem anderen geeigneten Material hergestellt sein. Entscheidend ist letztendlich, daß es elastisch ist. Als Beispiele für die jeweiligen Materialklassen seien Gummi, Polyurethan und Polyvinylchlorid genannt.

Durch eine Kombination der unterschiedlichen Materialien, insbesondere durch einen schichtenweisen Aufbau des Bandes 15, lassen sich ansonsten einander oft widersprechende Eigenschaften gezielt einstellen. Weist das Band 15 beispielsweise einen dreischichtigen Aufbau mit einer mittleren Schicht hoher Zugfestigkeit und mit einem hohen Elastizitätsmodul sowie zwei äußeren weichen Schichten und entsprechend hohen Reibungskoeffizienten auf, so eignet es sich ganz besonders als rutschfeste Unterlage für alle Arten von Behältnissen 10. Der hohe Reibungskoeffizient der oberen Schicht verhindert, daß das Behältnis 10 gegenüber dem Band 15 verrutscht, während die untere Schicht, die ebenfalls einen hohen Reibungskoeffizienten besitzt, dem Verrutschen des Bandes 15 gegen die Kofferraumabdeckung 12 entgegenwirkt. Letzteres wird durch die hohe Zugfestigkeit der mittleren Schicht noch unterstützt. Gleichzeitig eignet sich dieses dreischichtige Band 15 aufgrund seiner Elastizität und hohen Zugfestigkeit zum Einklemmen schwerer Behältnisse 10, die jedoch nicht so voluminös sein dürfen, daß sie sich durch das Band 15 nicht mehr umspannen lassen. Diese beispielhaft genannte Materialkombination für das Band 15 zeigt, daß sich durch einen schichtenweisen Aufbau des Bandes 15 einander widersprechende Eigenschaften, wie sie hohe Reibungskoeffizienten und hohe Elastizitätmodule im allgemeinen darstellen, vereinigen lassen.

Der buchsenförmige Teil 23 des Unterteils 22 weist in etwa eine Höhe auf, die der Dicke der Kofferraumabdeckung 12 entspricht. Dadurch wird ein Befestigungsteil 21 geschaffen, das im montierten Zustand, also mit aufgesetztem Deckel 32, in etwa mit der Oberfläche der Kofferraumabdeckung 12 abschließt, so daß keine störende Beeinträchtigung des Kofferraumangebots zu befürchten ist, insbesondere also keine Beschädigungen durch hervorstehende Haken und Ösen oder dergleichen.

Wie aus Fig. 2 noch ersichtlich, kann durch Stehenlassen eines keilartigen Vorsprungs 19 in der Aussparung 20, der dann in den einseitig sich öffnenden Hohlraum 28 hineinragt, ein Verdrehen des Befestigungsteils 21 verhindert werden. In bestimmten Fällen kann andererseits jedoch auch ein Verdrehen erwünscht sein, etwa um das Band 15 vom jeweiligen Befestigungsteil 21 ausgehend mit anderen Befestigungsteilen 21 wahlweise zu verbinden.

## Patentansprüche

1. Vorrichtung zur Fixierung von Behältnissen im Kofferraum eines Kraftfahrzeuges
(a) mit zumindest einem an seinen Enden (18) befestigbaren Band (15) aus einem elastischen Material,
dadurch gekennzeichnet, daß
(b) das Band (15) eine rutschfest ausgebildete Unterseite (16) und eine rutschfest ausgebildete Oberseite (17) aufweist,
(c) das Band (15) an einer Kofferraumabdeckung befestigt ist und
(d) unter einer leichten Spannung zwischen seinen Enden (18) mit seiner Unterseite (16) rutschfest auf der Kofferraumabdeckung (12) aufliegt, so daß das Band (15) als rutschfeste Unterlage für ein darauf abgestelltes Behältnis oder über ein Behältnis gespannt als Klemmvorrichtung dienen kann.

2. Vorrichtung nach Anspruch 1, dadurch gekennzeichnet, daß in Aussparungen (20) der Kofferraumabdeckung (12) aufnehmbare Befestigungsteile (21) zum Befestigen der Enden (18) des Bandes (15) vorgesehen sind.

3. Vorrichtung nach Anspruch 2, dadurch gekennzeichnet, daß jeder Befestigungsteil (21) einen in einer Aussparung (20) der Kofferraumabdeckung (12) aufnehmbaren Unterteil (22) und einen mit dem Unterteil (22) verbindbaren Deckel (32) aufweist, die im verbundenen Zustand klemmend an der Unterseite bzw. an der Oberseite der Kofferraumabdeckung (12) anliegen.

4. Vorrichtung nach Anspruch 3, dadurch gekennzeichnet, daß der Deckel (32) auf den Unterteil (22) steckbar ist.

5. Vorrichtung nach Anspruch 4, dadurch gekennzeichnet, daß der Deckel (32) durch widerhakenartig ausgebildete Fortsätze (34) im Unterteil (22) gehalten ist.

6. Vorrichtung nach einem der Ansprüche 2 bis 5, dadurch gekennzeichnet, daß der Befestigungsteil (21) mit einem Hohlraum (28) und mit einer schlitzartigen Öffnung (26) versehen ist, die an einem Ende einen verbreiterten Querschnitt aufweist.

7. Vorrichtung nach einem der Ansprüche 2 bis 6, dadurch gekennzeichnet, daß das Band (15) mit seinem Ende (18) formschlüssig in den Befestigungsteilen (21) gehalten wird.

8. Vorrichtung nach Anspruch 6 oder 7, dadurch gekennzeichnet, daß die Enden (18) des Bandes (15) zu Verdickungen ausgebildet sind, die jeweils durch den verbreiterten Querschnitt der Öffnung (26) steckbar, unter den schmalen Bereich (27) der Öffnung (26) schiebbar und in dieser Stellung im Befestigungsteil (21) gehalten sind.

9. Vorrichtung nach einem der Ansprüche 1 bis 8, dadurch gekennzeichnet, daß das Band (15) im ungestreckten Zustand eine Länge aufweist, die etwa dem Abstand zwischen den zu seiner Befestigung dienenden Befestigungsteilen (21) entspricht.

10. Vorrichtung nach einem der Ansprüche 1 bis 9, dadurch gekennzeichnet, daß das Band (15) aus einem ein- oder mehrschichtigen Material besteht bzw. aus mehreren Materialschichten aufgebaut ist, die unterschiedliche Materialeigenschaften besitzen.

11. Vorrichtung nach Anspruch 10, dadurch gekennzeichnet, daß eine Schicht eines solchen Bandes (15) aus einem thermoplastischen Material, insbesondere PVC, einem duroplastischen Material, insbesondere PUR, oder aus einem elastomeren Material, insbesondere Gummi, besteht.

12. Vorrichtung nach einem der Ansprüche 1 bis 11, dadurch gekennzeichnet, daß das Band (15) an seiner Unterseite (16) und an seiner Oberseite (17) eine Profilierung in Form einer Rillung, Rändelung oder dergleichen aufweist.

13. Rutschfeste Unterlage, dadurch gekennzeichnet, daß sie als Vorrichtung nach einem der Ansprüche 1 bis 12 ausgebildet ist.

14. Klemmvorrichtung für Behältnisse im Kofferraum eines Kraftfahrzeuges, dadurch gekennzeichnet, daß sie als Vorrichtung nach einem der Ansprüche 1 bis 12 ausgebildet ist.

## Claims

1. A device for fastening containers in the luggage compartment of a motor vehicle, comprising
a) at least one strap (15) fastenable at its ends (18) and of an elastic material,
**characterized in** that
b) the strap (15) comprises a non-slippably-formed underside (16) and a non-slippably-formed upper side (17),
c) the strap (15) is fastened to a luggage-compartment cover and
d) lies with a light bias between its ends (18) non-slippably with its underside (16) on the luggage compartment cover (12) so that the strap (15) can serve as a non-slippable underlayer for a container set thereupon or as clamping means when biased over a container.

2. A device according to claim 1, **characterized in** that fastening members (21) accomodatable in the recesses (20) in the luggage compartment cover (12) are provided to fasten the ends (18) of the strap (15).

3. A device according to claim 2, **characterized in** that each fastening member (21) comprises a lower part (22) accomodatable in a recess (20) in the luggage-compartment cover and a top (32) connectable with the lower part (22), which engage in connected condition, clamping to the underside and the upper side of the luggage compartment cover (12).

4. A device according to claim 3, **characterized in** that the top (32) is plug-in-able into the lower part (22).

5. A device according to claim 4, **characterized in** that the top (32) is held in the lower part (22) by barbed projections (34).

6. A device according to one of the claims 2 to 5, **characterized in** that the fastening member (21) is provided with a hollow space (28) and with a slit-like opening (26) which has at one end a widened cross section.

7. A device according to one of the claims 2 to 6, **characterized in** that the strap (15) with its end (18) is held in the fastening members (21) by form fit.

8. A device according to claim 6 or 7, **characterized in** that the ends (18) of the strap (15) are formed into thicker parts which can each be inserted through the widened cross-section of the opening (26), can be pushed under the narrow area (27) of the opening (26) and are held in this position in the fastening member (21).

9. A device according to one of the claims 1 to 8, **characterized in** that the strap (15) has a length in the unstretched condition which corresponds approximately to the distance between the fastening members (21) serving its fastening.

10. A device according to one of the claims 1 to 9, **characterized in** that the strap (15) is constructed of single or multiply layered material, or of several material layers having differing material properties.

11. A device according to claim 10, **characterized in** that a layer of such a strap (15) consists of a thermoplastic material, in particular PVC, a duroplastic material, in particular PUR, or an elastomeric material, in particular rubber.

12. A device according to one of the claims 1 to 11, **characterized in** that the strap (15) comprises a profile on its underside (16) and its upper side (17) in the form of grooving, knurling or the like.

13. A non-slippable base, **characterized in** that it is formed as a device according to one of the claims 1 to 12.

14. A clamping device for containers in the luggage compartment of a motor vehicle, **characterized in** that it is formed as a device according to one of the claims 1 to 12.

## Revendications

1. Dispositif pour immobiliser des objets dans le compartiment à bagages d'un véhicule automobile
(a) comprenant au moins une sangle (15) en matériau élastique pouvant être fixée à ses extrémités (18),
caractérisé en ce que
(b) la sangle (15) comporte une face inférieure (16) antidérapante et une face supérieure (17) antidérapante,
(c) la sangle (15) est fixée au plancher du compartiment à bagages et
(d) sa face inférieure (16) repose de manière antidérapante sur le plancher (12) du compartiment à bagages sous une légère tension entre ses extrémités (18), de sorte que la sangle (15) peut servir de moyen d'appui antidérapant pour un récipient posé dessus ou de dispositif de blocage tendu par-dessus un récipient.

2. Dispositif selon la revendication 1, caractérisé en ce que des éléments de fixation (21) logés dans des évidements (20) du plancher (12) du compartiment à bagages sont prévus pour fixer les extrémités (18) de la sangle (15).

3. Dispositif selon la revendication 2, caractérisé en ce que chaque élément de fixation (21) comporte une partie inférieure (22) logée dans un évidement (20) du plancher (12) du compartiment à bagages et un couvercle (32) relié à la partie inférieure (22), ces pièces, une fois reliées, étant bloquées et appliquées respectivement contre les faces inférieure et supérieure du plancher (12) du compartiment à bagages.

4. Dispositif selon la revendication 3, caractérisé en ce que le couvercle (32) s'emboîte sur la partie inférieure (22).

5. Dispositif selon la revendication 4, caractérisé en ce que le couvercle (32) est retenu dans la partie inférieure (22) par des pattes (34) en forme d'ergots.

6. Dispositif selon l'une des revendications 2 à 5, caractérisé en ce que l'élément de fixation (21) est pourvu d'une cavité (28) et d'une ouverture (26) en forme de fente dont l'une des extrémités présente une section transversale élargie.

7. Dispositif selon l'une des revendications 2 à 6, caractérisé en ce que l'extrémité (18) de la sangle (15) est retenue par complémentarité de formes dans les éléments de fixation (21).

8. Dispositif selon la revendication 6 ou 7, caractérisé en ce que les extrémités (18) de la sangle (15) se présentent sous la forme de parties renflées dont chacune peut être introduite dans la section transversale élargie de l'ouverture (26), poussée sous la zone étroite (27) de l'ouverture (26) et maintenue dans cette position à l'intérieur de l'élément de fixation (21).

9. Dispositif selon l'une des revendications 1 à 8, caractérisé en ce qu'en position relâchée la sangle (15) possède une longueur correspondant sensiblement à la distance entre les éléments de fixation (21) servant à la fixer.

10. Dispositif selon l'une des revendications 1 à 9, caractérisé en ce que la sangle (15) est constituée d'un matériau à une ou plusieurs couches ou de plusieurs couches de matériau possédant des propriétés différentes.

11. Dispositif selon la revendication 10, caractérisé en ce que l'une des couches d'une telle sangle (15) est réalisée dans un matériau thermoplastique, en particulier en PVC, dans un matériau thermodurcissable, en particulier en PUR, ou dans un matériau élastomère, en particulier en caoutchouc.

12. Dispositif selon l'une des revendications 1 à 11, caractérisé en ce que la sangle (15) présente, sur sa face inférieure (16) et sur sa face supérieure (17), un profilage en forme de rainurage, de moletage ou analogue.

13. Moyen d'appui antidérapant, caractérisé en ce qu'il est conçu sous la forme d'un dispositif selon l'une des revendications 1 à 12.

14. Dispositif pour bloquer des objets dans le compartiment à bagages d'un véhicule automobile, caractérisé en ce qu'il est conçu sous la forme d'un dispositif selon l'une des revendications 1 à 12.
